# EUROPEAN PATENT SPECIFICATION

(11) **EP 1 238 741 B1**
(45) Date of publication and mention of the grant of the patent: **29.06.2011**
(21) Application number: 02251356.8
(22) Date of filing: 27.02.2002
(51) Int. Cl.: B23K 1/00, B23K 35/02, B23K 35/32, B23K 35/00

(54) **Fabrication method for Titanium aluminide honeycomb panel structures**
Verfahren zur Herstellung von Honigwabenstrukturen aus einer Titan-Aluminium Legierung
Procédé de fabrication des structures en nid d'abeille en alliage de titane-aluminium

(30) Priority: 27.02.2001 US 794567; 14.12.2001 US 21785
(43) Date of publication of application: 11.09.2002
(73) Proprietor: Rohr, Inc., Chula Vista, California 91910 (US)
(72) Inventor: Leholm, Robert Barry, Santee, California 92071 (US); Schertzer, Kenneth Lynn (SR), Imperial Beach, California 91932 (US); Good, Steven Allen, San Diego, California 92111 (US); Widmer, Ronald Harry, San Diego, California 92116 (US); Schneider, James (JR), San Diego, California 92126 (US); Seal, Coif Dean, Chula Vista, California 91911 (US)
(74) Representative: Appleton, Ben

(56) References cited:
- US-A- 3 981 429
- US-A- 4 869 421
- US-A- 5 318 214
- US-A- 6 149 051
- KALIN B A ET AL: "BRAZING THIN SHEET STRUCTURES OF TITANIUM ALLOYS USING CTEMET AMORPHOUS BRAZING ALLOYS" WELDING INTERNATIONAL, WELDING INSTITUTE. ABINGTON, GB, vol. 11, no. 3, 1997, pages 234-235, XP000680674 ISSN: 0950-7116
- KALIN B A ET AL: "AMORPHOUS STRIP BRAZING ALLOYS FOR HIGH-TEMPERATURE BRAZING. EXPERIENCE WITH DEVELOPING PRODUCTION TECHNOLOGY AND APPLICATION" , WELDING INTERNATIONAL, WELDING INSTITUTE. ABINGTON, GB, VOL. 10, NR. 7, PAGE(S) 578-581 XP000593550 ISSN: 0950-7116 * the whole document *

## Description

The present invention relates to a method of preparing honeycomb panel structures.

Diffusion brazing and bonding methods for the joining of honeycomb sandwich panels and other titanium structures are known to those skilled in the art. However, as described for example in U.S. Patent Nos. 3,768,985 and 3,769,101, such diffusion brazing and bonding techniques have not been found entirely satisfactory, especially for joining titanium-based components such as joining a titanium honeycomb core material to a titanium facing sheet. In response to the problems associated with such diffusion brazing and bonding methods, U.S. Patent No. 3,768,985 describes a combined brazing and diffusion process referred to as a liquid interface diffusion (LID) process, also known as transient liquid phase (TLP) bonding, for joining a titanium honeycomb core and a titanium facing sheet bonded thereto. A brazing or filler material containing 38 % Cu, 38% Ni and a balance of Ag (by weight) is interposed between the faying surfaces of the honeycomb core and facing sheet, and the brazing material is rendered liquid at the brazing temperature to form a liquid interface between the faying surfaces which establishes the required metal-to-metal contact therebetween so that atomic transport can be effected and diffusion accelerated. In addition, U.S. Patent No. 3,769,101 describes a LID process in which a small amount of three or more selected metals are interposed between the faying edges of the material to be bonded, to form a diffusion bridge. The selected metals may be Cu, Ni and Ag, or Cu, Ni and one low melting point metal selected from the group consisting of Sb, Bi, Cd, Sn, Zn, Au and Pt.

However, there are several additional problems associated with the LID process itself. For example, it is often difficult to achieve sufficient bonding of mismatched faying surfaces. In addition, disbonding of the surfaces after initial bonding also may occur, which may require post-processing repairs such as the introduction of pins and the like to join the surfaces with sufficient mechanical integrity. In view of the foregoing, it would be desirable to employ a process which is capable of sufficiently bonding slightly mismatched faying surfaces, and reduces the incidence of disbonding of the initially bonded surfaces and the concomitant necessity to use pins and the like to sufficiently join the surfaces.

As an alternative to LID, diffusion has been employed as described, for example, in U.S. Patent No. 4,893,743. However, in order to achieve diffusion bonding, it normally becomes necessary to establish an ultraclean condition of the parts, and to employ high pressure and temperature for extended periods of time without causing gross deformation and degradation of mechanical properties which might result from use of excessive time, temperature, or pressure. Honeycomb structures typically require a low bonding pressure, to avoid the risk of cracking the core.

The use of amorphous Ti-based brazing alloys for diffusion brazing and bonding of thin sheet structures of titanium and its alloys is described in B.A. Kalin et al., "Brazing Thin Sheet Structures of Titanium Alloys Using STEMET Amorphous Brazing Alloys," in Welding International, pp. 234-35 (1997). However, relatively short bonding times (i.e. 5-30 minutes) are described, which tend to limit the degree of atomic diffusion and homogenization of the joint formed between the honeycomb core and facing sheet.

The use of titanium aluminide (Ti-Al) alloys has been described for example in U.S. Patent No. 5,318,214 and in U.S. Patent Neo. 4,869,421 As disclosed in the 214 patent:, LID typically requires the system to be maintained for about 80-90 minutes at bonding temperatures. Chaturvedi et al. have disclosed diffusion brazing of an alloy containing titanium, aluminum, niobium, and manganese with a titanium-copper-nickel metal foil, but they have not discussed its application to honeycomb structures.

US-A-3981429 discloses brazing methods utilising Ti-Al honeycomb cores, Ti-Al foil layers and Ti-Al facing layers.

US 6149051 describes a method of brazing a Ti alloy base material to facing sheets, by way of a brazing filler comprising Ti-Cu-Ni-Zr. The Ti alloy disclosed in the core and facing sheets consists of alpha or beta phase titanium alloys only.

In view of the above, there is a need in the art for a titanium aluminide honeycomb structure capable of being prepared by brazing with improved braze properties.

Accordingly, it is an object of the present invention to provide titanium aluminide (Ti-Al) structures with improved braze properties and a method of preparing such structures. More specifically, it is an object of the present invention to provide a honeycomb structure containing a titanium aluminide alloy honeycomb core joined to at least one Ti-Al alloy facing sheet by a diffusion brazed composition zone formed from a metal foil containing copper, titanium, and optionally nickel, which joins the faying surfaces of the honeycomb core and facing sheet(s) by being rendered liquid at the brazing temperature and thereby forming a liquid interface that extensively diffuses into the core and facing sheet(s). It is another object of the invention to provide a method of preparing such a structure. The use of the diffusion brazed composition zone advantageously enables the brazing of such Ti-Al alloy components, including the brazing of slightly mismatched faying surfaces of such components, which reduces the incidence of disbonding of the initially joined surfaces and the concomitant necessity to use pins and the like to sufficiently join the surfaces. The structure and method of the invention are useful in applications where high strength, lightweight materials are required, such as in aircraft and aerospace-related applications.

The present invention provides a Ti-Al honeycomb panel structure which includes a Ti-Al alloy honeycomb core and at least one Ti-Al alloy facing sheet brazed thereto with a diffusion brazing composition. The honeycomb structure is prepared by a method including:
(a) providing a Ti-Al alloy honeycomb core having a faying surface and at least one Ti-Al alloy facing sheet having a faying surface;
(b) contacting the honeycomb core flaying surface and the at least one facing sheet faying surface, and positioning therebetween a metal braze filler foil containing copper, titanium nickel and zirconium, to form a braze assembly;
(c) subjecting the braze assembly to sufficient positive pressure to maintain position and alignment for joining; and
(d) heating the braze assembly for a sufficient amount of time to join the honeycomb core with the at least one facing sheet.

In a first embodiment, the honeycomb structure is a hybrid Ti-Al honeycomb structure in which said the facing sheer (s) is a gamma-based Ti-Al ("γ-Ti-Al") facing sheet having a thickness of 0.007 to 0.040 inches (0.178mm to 1.016mm) and the core is fabricated from orthorhombic Ti-Al ("O-Ti-Al") foil gauges having a thickness of about 0.003 inches (0.076mm). In a second embodiment, the honeycomb structure is an all γ-Ti-Al honeycomb structure, in which the Ti-Al alloy used for the fabrication of the core is γ-Ti-Al and the Ti-Al alloy used for the facing sheet(s) is also γ-Ti-Al. In one particularly preferred embodiment, the core is fabricated from γ-Ti-Al foil gauges having a thickness of about 0.004 inches (0.102mm). In a third embodiment, the honeycomb structure is an all O-Ti-Al honeycomb structure, in which the Ti-Al alloy used for the fabrication of the core is O-Ti-Al and the Ti-Al alloy used for the facing sheet(s) is also O-Ti-Al. In one particularly preferred embodiment, the core is fabricated from γ-Ti-Al foil gauges having a thickness of about 0.003 inches (0.076mm). γ-Ti-Al alloys may include PM γ-MET, supplied by Plansee of Reutte, Austria.

In another preferred embodiment, the metal braze filler foil contains copper, titanium, nickel, and zirconium.

In a particularly preferred embodiment, the metal braze filler foil is formed by a rapid solidification process or a melt spinning process.

The invention will now be further described, by way of example, with reference to the accompanying drawings in which:
Figure 1 is a perspective view of an embodiment of the assembly of the components as used in the structure of the present invention.
Figure 2 is a schematic section view taken perpendicular to the surface of the assembly after brazing.
Figure 3 is a photomicrograph of a braze joint cross section for a hybrid Ti-Al honeycomb structure.
Figure 4 is a photograph of an as-brazed hybrid Ti-Al honeycomb panel.
Figure 5 is a photograph of two hybrid Ti-Al panels.
Figures 6 and 7 are photomicrographs of braze joint cross section of a top section for an all γ-Ti-Al honeycomb structure.
Figure 8 and 9 are photomicrographs of braze joint cross section of a bottom section for an all γ-Ti-Al honeycomb structure
Figure 10 is a photograph of a section of γ-Ti-Al core fabricated at room temperature
Figure 11 is a photograph of a 3inch x 3inch (76.2mm x 76.2mm) all γ-Ti-Al honeycomb panel with the core section that was used.
Figure 12 is a photomicrograph of a braze joint cross section for an all O-Ti-Al honeycomb structure.
Figure 13 is a photograph of an all O-Ti-Al panel .
Figure 14 is a photograph of three face skin-to-core flatwise tension specimens after testing.
Figure 15 is a photograph of a honeycomb flexure specimen after testing.

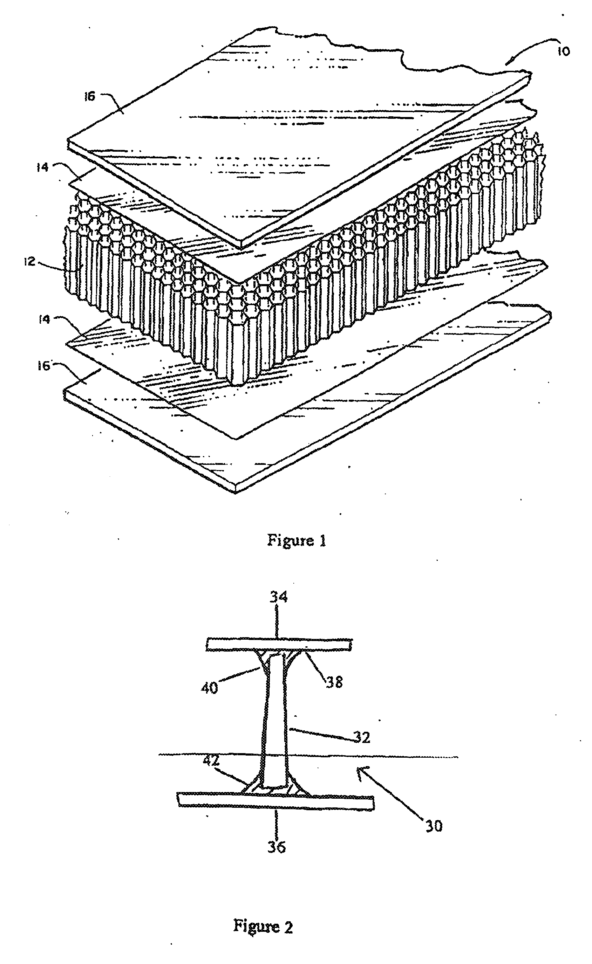

Reference is now made to Figure 1 herein. In Figure 1, a perspective view of an assembly (10) that includes a honeycomb core (12), a pair of braze metal foils (14), and a pair of face sheets (16) is disclosed. The method of the present invention is performed by applying low but sufficient positive pressure to the faying surfaces and metal braze filler foil therebetween (i.e. the braze assembly) to maintain position and alignment for joining. Fixturing arrangements which may be used in conjunction with the invention include the application of positive pressure by flex-weight loading, differences in gas pressure (as described in U.S. Patent No. 5,199,631, incorporated herein by reference), and the application of differences in the coefficient of thermal expansion of fixturing devices (as described in U.S. patent No. 4,429,824, incorporated herein by reference). The braze assembly is then heated under suitable conditions to a temperature that allows melting of the metal braze filler foil with both the core alloy and the face sheet alloy. The assembly is held at the chosen temperature for a sufficient amount of time to allow melting of the metal braze filler foil and provide substantially complete wetting of the faying surfaces and diffusion to a desired degree in the core and facing sheet.

The invention uses a relatively thick (0.0008 inch (0.0203mm) to 0.006 inch (0.152mm), preferably about 0.002 inch (0.051mm)) metal braze filler foil of an alloy containing copper, titanium, and optionally nickel. When the metal braze filler foil contains nickel, it may further include zirconium. The filler metal must be capable of melting and become active in the joint area. It must also be capable of extensively diffusing into the base metal. The thick metal braze filler foil provides advantages over the thin LID foil in that it decreases the incidence of disbonds in slightly mismatched faying surfaces. The diffusion brazing times required are typically about 30 to 90 minutes.

Preferably, the assembly may be heated to a temperature in the range of about 1700 °F to 2200 °F (927°C to 1204°C) for a braze soak time of between 1 minute and 150 minutes, to cause melting of the metal foil and brazing of the honeycomb core and facing sheet(s) faying surfaces. In one preferred embodiment, the assembly is heated to a temperature of about 1900 °F (1038°C) for at least 30 minutes in a protective atmosphere such as a vacuum furnace and thereafter cooled to room temperature. In another preferred embodiment, the assembly is heated to a temperature of about 1800 °F (982°C) and held at that temperature for about 30 minutes in a protective atmosphere such as a vacuum furnace and thereafter cooled to room temperature. In a particularly preferred embodiment, the assembly is heated in a protective atmosphere such as a vacuum furnace at a heating rate of about 10-20 °F/minute (0.093 to 0.185°C/s) to a temperature just below the solidus temperature of the metal braze filler foil, and thereafter further heated at a heating rate of about 30 °F/minute (0.278 °C/s) to a temperature just above the filler foil liquidus temperature for about 30 minutes, followed by a controlled cooling of the assembly to room temperature.

The method of the invention results in the formation of a diffusion brazed composition zone that joins a Ti-Al alloy honeycomb core with a Ti-Al alloy facing sheet(s) brazed where the region of the brazed joint therebetween includes a substantially crack-free interface. Reference is now made to Figure 2 herein. The cross sectional schematic view in Figure 2 graphically represents the effects characteristic of the diffusion brazing process of the present invention. When the core (32), top face sheet (34) and bottom face sheet (36) are brought together under low but sufficient pressure and heated to the melting temperature of the braze metal filler foil, the braze metal filler foil melts and diffuses into a diffusion zone (38) into the adjacent face sheet and core edge regions. Braze solidification occurs, with the top braze fillet (40) and bottom braze fillet (42) joining the core to the top face sheet (34) and bottom face sheet (36), respectively, whereupon the assembly (30) is allowed to cool, forming a smooth joint as seen in Figure 2.

The diffusion brazing method of the invention includes:
(a) providing a Ti-Al alloy honeycomb core having a faying surface and at least one Ti-Al alloy facing sheet having a faying surface;
(b) contacting the honeycomb core faying surface with the at least one facing sheet faying surface, and positioning therebetween a metal braze filler foil containing copper, titanium, and optionally nickel, to form a braze assembly;
(c) subjecting the braze assembly to sufficient positive pressure to maintain position and alignment for joining; and
(d) heating the braze assembly for a sufficient amount of time to join the honeycomb core with the at least one facing sheet.

Although not limited thereto, the method of the invention is particularly applicable to the brazing of honeycomb sandwich panel structures formed from γ-Ti-Al alloys, O-Ti-Al alloys, or γ-Ti-Al alloys and O-Ti-Al alloys.

As described above, the metal braze filler foil used in accordance with the invention is a metal foil containing copper, titanium, and optionally nickel. When the metal braze filler foil contains nickel, it may further include zirconium. Preferably, the metal braze filler foil contains about 15-23 wt. % copper, about 53-70 wt. % titanium, about 12-15 wt. % nickel, and about 0-12 % zirconium. In a particularly preferred embodiment of the invention, the braze filler metal foil is an amorphous, rapidly solidified or melt-spun metal foil formed by either a rapid solidification process or a melt spinning process. Metal foils employed in the invention may be made by the method described in U.S. Patent No. 4,221,257, which is incorporated herein by reference in its entirety. The metal foil typically has a thickness of about 0.001 inches (0.025mm) for the system containing titanium, zirconium, nickel, and copper, and of about 0.002 inches (0.051mm) for the system containing titanium, nickel and copper but not including zirconium. The metal foil may include STEMET 1201, available from Mifi-Ameto of Moscow, Russia.

The structure and method of the invention are further illustrated by the following examples, which are not intended to limit the invention in any way.

### Example 1: Hybrid Ti-Al Honeycomb Structure

A Ti-Al honeycomb structure was prepared from a 0.01 inch (0.254mm) thick solid γ-Ti-Al face sheet, a 0.5 inch (12.7mm) high core made from 0.003 inch (0.076mm) thick O-Ti-Al foil ribbon, and a second 0.01 inch (0.254mm) thick solid γ-T-Al face sheet by placing the faying surfaces of the core and face sheets together, with a 0.002 inch (0.051mm) thick metal braze filler foil having a nominal composition of 15 wt. % Cu, 15 wt. % Ni, and 70 wt. % Ti. The assembly was subjected to sufficient positive pressure to maintain position and alignment for joining, and the assembly was heated in a vacuum furnace as follows:
(1) Heated at 20 °F/min. (0.185°C/s) up to a temperature of 1650 °F (899°C);
(2) Subsequently heated at 30 °F/min. (0.278 °C/s) up to a temperature of 1800 °F (982°C);
(3) Held at 1800 °F (982°C) for 30 minutes; and
(4) Cooled to room temperature.

### Example 2: All γ-Ti-Al Honeycomb Structure

A Ti-Al honeycomb structure was prepared from a 0.01 inch (0.254mm) thick solid γ-Ti-Al face sheet, a 0.5 inch (12.7mm) high core made from 0.004 inch (0.102mm) thick γ-Ti-Al foil ribbon, and a second 0.01 inch (0.254mm) thick solid γ-Ti-Al face sheet by placing the faying surfaces of the core and face sheets together, with a 0.002 inch (0.051mm) thick metal foil having a nominal composition of 70 wt. % Ti, 15 wt. % Cu, and 15 wt. % Ni. The assembly was subjected to sufficient positive pressure to maintain position and alignment for joining, and the assembly was heated in a vacuum furnace as follows:
(1) Heated at 20 °F/min. (0.185 °C/s) up to a temperature of 1650 °F (899°C);
(2) Subsequently heated at 30 °F/min (0.278°C/s) up to a temperature of 1900 °F (1038°C);
(3) Held at 1900 °F (1038°C) for 30 hours; and
(4) Cooled to room temperature.

### Example 3: All O-Ti-Al Honeycomb Structure

A Ti-Al honeycomb structure was prepared from a 0.01 inch (0.254mm) thick solid O-Ti-Al face sheet, a 0.5 inch (12.7mm) high core made from 0.003 inch (0.076mm) thick O-Ti-Al foil ribbon, and a second 0.01 inch (0.254mm) thick solid O-Ti-Al face sheet by placing the faying surfaces of the core and face sheets together, with a 0.002 inch (0.051mm) thick metal foil having a nominal composition of 70 wt. % Ti, 15 wt. % Cu, and 15 wt. % Ni. The assembly was subjected to sufficient positive pressure to maintain position and alignment for joining, and the assembly was heated in a vacuum furnace as follows:
(1) Heated at 20 °F/min (0.185°C/s) up to a temperature of 1650 °F (899°C);
(2) Subsequently heated at 30 °F/min (0.278°C/s) up to a temperature of 1800 °F (982°C) ;
(3) Held at 1800 °F (982°C) for 30 minutes; and
(4) Cooled to room temperature.

Additional honeycomb structures were prepared in accordance with the above examples in which the thickness of the braze metal filler foil was varied from 0.001 to 0.003 inches (0.025 to 0.076mm). The resulting brazed systems were tested for maximum micro-hardness gradient, overlap shear strengths, flatwise tension strength (skin to core), and flexure strength.

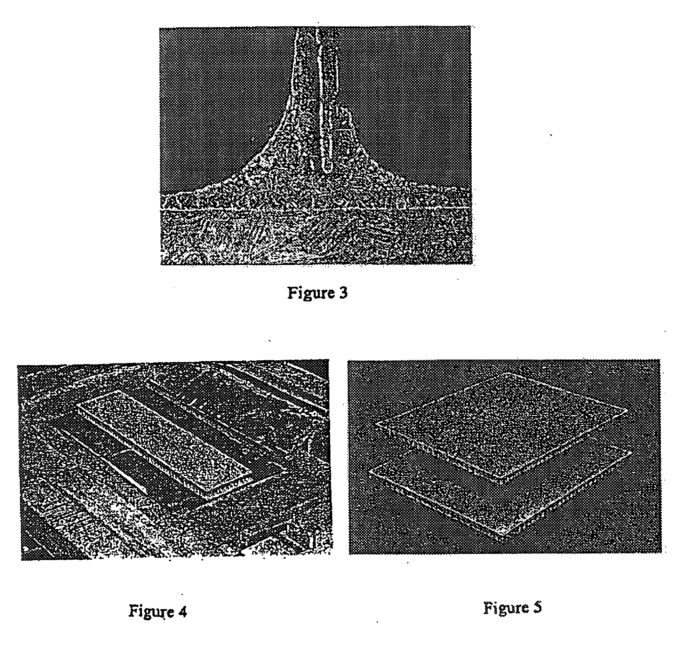

A cross section photomicrograph of a braze joint cross section for a hybrid Ti-Al honeycomb structure prepared in accordance with the above examples is shown in Figure 3. A photograph of an as-brazed hybrid Ti-Al honeycomb panel is shown in Figure 4. A photograph of two hybrid Ti-Al panels is shown in Figure 5.

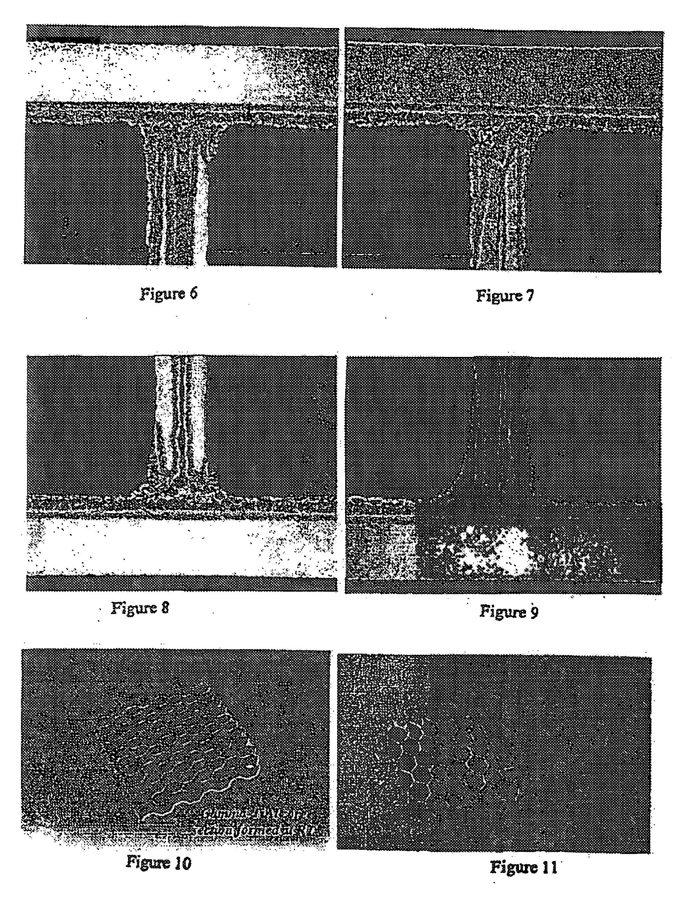

Photomicrograph cross sections of a top section for an all γ-Ti-Al honeycomb structure prepared in accordance with the above examples are shown in Figures 6 and 7. Photomicrograph cross sections of a bottom section for an all γ-Ti-Al honeycomb structure prepared in accordance with the above examples are shown in Figures 8 and 9. A photograph of a section of γ-Ti-Al core fabricated at room temperature is shown in Figure 10. A photograph of a 3" x 3" (7.62mm x 7.62mm) all γ-Ti-Al honeycomb panel with the core section that was used in Figure 10 is shown in Figure 11.

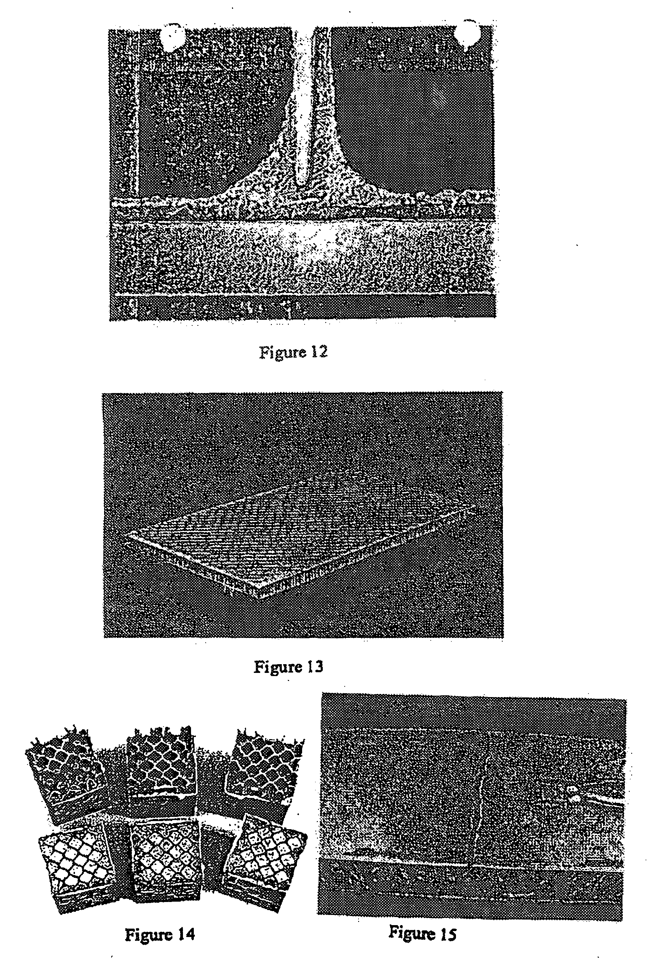

A cross section photomicrograph of a braze joint cross section for an O-Ti-Al honeycomb structure prepared in accordance with the above examples is shown in Figure 12. A photograph of an all O-Ti-Al panel is shown in Figure 13.

A photo of three face skin-to-core flatwise tension specimens after testing is shown in Figure 14. A photo of a honeycomb flexure specimen after testing is shown in Figure 15. The above mechanical properties for the additional honeycomb structures are set forth in Table 1.

**TABLE 1**

| Typical screen testing results of the successful brazes used to join O-Ti-Al core to γ-Ti-Al facing sheet | | | | | |
|---|---|---|---|---|---|
| Braze Metal Filler Foil | Braze Temperature of Test Honeycomb Panel (°F) [°C] | Micro-Hardness Gradient in Braze Joint (knoop hardness) | Overlap Shear Strengths (Psi) [Pa] | Flatwise Tension Strength (skin to core) (Psi) [Pa] | Flexure Strength (skin to core) (Psi) [Pa] |
| 1) Ti-Cu-Ni | 1800 [982°C] | 236 | 5640 [3.89x10⁷] | 1562 - 2586 [1.08x10⁷ - 1.78x10⁷] | N/T |
| | 1900 [1038°C] | N/T | 5210 [3.59x10⁷] | 954 - 4649 [6.58x10⁶ - 3.21x10⁷] | > 67,000 [>4.62x10⁸] |
| | 2000 [1093°C] | 342 | 5190 [3.58x10⁷] | 2146 - 3198 [1.48x10⁷ - 2.20x10⁷] | N/T |
| 2) Ti-Zr-Cu-Ni | 1800 [982°C] | 318 | 2885* [1.99x10⁷] | 2016 - 2079 [1.39x10⁷ - 1.43x10⁷] | N/T |
| | 1900 [1038°C] | N/T | 2541 [1.75x10⁷] | 2672 - 2869 [1.84x10⁷ - 1.98x10⁷] | N/T |
| | 2000 [1093°C] | 297 | 2694 [1.86x10⁷] | 2133 - 3202 [1.47x10⁷ - 2.21x10⁷] | N/T |

| | | | | | |
|---|---|---|---|---|---|
| *Initial value of 771 psi [5.32x10⁶Pa] was measured and determined to be an unrepresentative value. | | | | | |

Although the invention has been illustrated by reference to various specific embodiments, it will be apparent to those skilled in the art that various changes and modifications may be made which clearly fall within the scope of the invention.

Numerical values given in parentheses are calculated from the primary values stated.

## Claims

1. A diffusion braze method comprising:
(a) providing a Ti-Al alloy honeycomb core (12) having a faying surface and at least one Ti-Al alloy facing sheet (16) having a faying surface;
(b) contacting said honeycomb core (12) faying surface and said at least one facing sheet (16) faying surface, and positioning therebetween a metal braze filler foil (14) containing copper, titanium nickel and zirconium, to form a braze assembly;
(c) subjecting said braze assembly to sufficient positive pressure to maintain position and alignment for joining; and
(d) heating said braze assembly for a sufficient amount of time to join said honeycomb core (12) with said at least one facing sheet (16), wherein
said Ti-Al alloy of said honeycomb core (12) and of said at least one facing sheet (16) is γ-Ti-Al, or
wherein said Ti-Al alloy of said honeycomb core (12) is orthorhombic Ti-Al and said Ti-Al alloy of said at least one facing sheet (16) is γ-Ti-Al, or
wherein said Ti-Al alloy of said honeycomb core (12) and of said at least one facing sheet (16) is orthorhombic Ti-Al.

2. The method of claim 1, wherein said metal foil (14) has a thickness of about 0.0008 to about 0.006 inches (0.020 to 0.152mm).

3. The method of claim 2, wherein said metal foil (14) has a thickness of about 0.002 inches (0.051mm).

4. The method of any preceding claim, wherein said metal foil (14) is formed by a rapid solidification process or a melt spinning process.

5. The method of any preceding claim, wherein said braze assembly is heated at a temperature between 1700 °F and 2200 °F (between 927°C and 1204°C).

6. The method of any preceding claim, wherein said amount of time is between 1 and 150 minutes.

7. The method of any preceding claim, wherein said braze assembly is heated in a vacuum furnace.

8. The method of claim 1, wherein said at least one facing sheet (16) has a thickness of about 0.007 to about 0.040 inches (about 0.178 to 1.016mm) and said core (12) is fabricated from γ-Ti-Al foil gauges having a thickness of about 0.004 inches (0.102mm).

9. The method of claim 1, wherein said core (12) is fabricated from orthorhombic Ti-Al foil gauges which have a thickness of about 0.003 inches (0.076mm).

## Patentansprüche

1. Ein Diffusionslötverfahren umfassend:
(a) Bereitstellen eines Ti-Al-Legierungshonigwabenkerns (12) mit einer Stoßfläche und wenigstens einer gegenüberstehenden Ti-Al-Legierungsplatte/-blech (16) mit einer Stoßfläche;
(b) In-Kontakt-bringen der Stoßfläche des Honigwabenkerns (12) und der Stoßfläche der wenigstens einen gegenüberstehenden Platte (16) und Anordnen zwischen diesen einer metallischen Lötfüllerfolie (14), welche Kupfer, Titan, Nickel und Zirkonium enthält, um einen Lötaufbau zu bilden;
(c) Unterwerfen des Lötaufbaus einem ausreichenden positiven Druck, um die Position und Ausrichtung zum Verbinden beizubehalten; und
(d) Erwärmen des Lötaufbaus für eine ausreichende Zeitdauer, um den Honigwabenkern (12) mit der wenigstens einen gegenüberliegenden Platte (16) zu verbinden, wobei die Ti-Al-Legierung des Honigwabenkerns (12) und der wenigstens einen gegenüberliegenden Platte (16) γ-Ti-Al ist, oder wobei die Ti-Al-Legierung des Honigwabenkerns (12) orthorhombisches Ti-Al ist und die Ti-Al-Legierung der wenigstens einen gegenüberliegenden Platte (16) γ-Ti-Al ist, oder wobei die Ti-Al-Legierung des Honigwabenkerns (12) und der wenigstens einen gegenüberstehenden Platte (16) orthorhombisches Ti-Al ist.

2. Verfahren nach Anspruch 1, wobei die Metallfolie (14) eine Dicke von ungefähr 0,020 bis ungefähr 0,152 mm (0,0008 bis 0,006 inch) aufweist.

3. Verfahren nach Anspruch 2, wobei die Metallfolie (14) eine Dicke von ungefähr 0,051 mm (0,002 inch) aufweist.

4. Verfahren nach einem der vorangehenden Ansprüche, wobei die Metallfolie (14) durch ein schnelles Verfestigungsverfahren oder ein Schmelzspinnverfahren hergestellt ist.

5. Verfahren nach einem der vorangehenden Ansprüche, wobei der Lötaufbau auf eine Temperatur zwischen 927°C und 1.204°C (1.700°F und 2.200°F) erwärmt wird.

6. Verfahren nach einem der vorangehenden Ansprüche, wobei die Zeitdauer zwischen 1 und 150 Minuten beträgt.

7. Verfahren nach einem der vorangehenden Ansprüche, wobei der Lötaufbau in einem Vakuumofen erwärmt wird.

8. Verfahren nach Anspruch 1, wobei die wenigstens eine gegenüberstehende Platte (16) eine Dicke von ungefähr 0,178 bis 1,016 mm (ungefähr 0,007 bis ungefähr 0,040 inch) aufweist und der Kern (12) aus γ-Ti-Al-Folienstreifen mit einer Dicke von ungefähr 0,0102 mm (0,004 inch) hergestellt wird.

9. Verfahren nach Anspruch 1, wobei der Kern (12) aus orthorhombischen Ti-Al-Folienstreifen hergestellt ist, welche eine Dicke von ungefähr 0,076 mm (0,003 inch) aufweisen.

## Revendications

1. Procédé de brasage par diffusion comprenant les étapes consistant à :
(a) mettre en oeuvre une âme en nid d'abeilles (12) d'alliage de Ti-Al ayant une surface d'affleurement et au moins une feuille frontale (16) d'alliage de Ti-Al ayant une surface d'affleurement ;
(b) mettre en contact ladite surface d'affleurement de l'âme en nid d'abeilles (12) et ladite surface d'affleurement de la au moins une feuille frontale (16) et positionner entre elles une feuille de charge de brasage métallique (14) contenant du cuivre, du titane, du nickel et du zirconium, afin de former un assemblage de brasage ;
(c) soumettre ledit assemblage de brasage à une pression positive suffisante pour maintenir la position et l'alignement pour la jonction ; et
(d) chauffer ledit assemblage de brasage pendant une période de temps suffisante pour joindre ladite âme en nid d'abeilles (12) avec ladite au moins une feuille frontale (16), dans lequel :
ledit alliage de Ti-Al de ladite âme en nid d'abeilles (12) et de ladite au moins une feuille frontale (16) est le γ-Ti-Al, ou
ledit alliage de Ti-Al de ladite âme en nid d'abeilles (12) est du Ti-Al orthorhombique et ledit alliage de Ti-Al de ladite au moins une feuille frontale (16) est le γ-Ti-Al, ou
ledit alliage de Ti-Al de ladite âme en nid d'abeilles (12) et de ladite au moins une feuille frontale (16) est du Ti-Al orthorhombique.

2. Procédé selon la revendication 1, dans lequel ladite feuille métallique (14) a une épaisseur d'environ 0,020 à environ 0,152 mm (0,0008 à 0,006 pouce).

3. Procédé selon la revendication 2, dans lequel ladite feuille métallique (14) a une épaisseur d'environ 0,051 mm (0,002 pouce).

4. Procédé selon l'une quelconque des revendications précédentes, dans lequel ladite feuille métallique (14) est formée par un procédé de solidification rapide ou un procédé de filage en fusion.

5. Procédé selon l'une quelconque des revendications précédentes, dans lequel ledit assemblage de brasage est chauffé à une température de 927 °C à 1204 ° C (1700 °F à 2200 °F).

6. Procédé selon l'une quelconque des revendications précédentes, dans lequel ladite période de temps est de 1 à 150 minutes.

7. Procédé selon l'une quelconque des revendications précédentes, dans lequel ledit assemblage de brasage est chauffé dans un four à vide.

8. Procédé selon la revendication 1, dans lequel ladite au moins une feuille frontale (16) a une épaisseur d'environ 0,178 à environ 1,016 mm (environ 0,007 à 0,040 pouce) et ladite âme (12) est fabriquée à partir de feuilles standard de γ-Ti-Al d'une épaisseur d'environ 0,102 mm (0, 004 pouce) .

9. Procédé selon la revendication 1, dans lequel dans ladite âme (12) est fabriquée à partir de feuilles standard de Ti-Al orthorhombique qui ont une épaisseur d'environ 0,076 mm (0,003 pouce).
